# EUROPEAN PATENT SPECIFICATION

(11) **EP 4 371 789 B1**
(45) Date of publication and mention of the grant of the patent: **01.10.2025**
(21) Application number: 23209940.8
(22) Date of filing: 14.11.2023
(51) Int. Cl.: B60C 11/24, B60C 23/04, B60C 23/20, B29D 30/00, B60C 19/00

(54) **INCLUSION OF A SENSOR IN A TIRE**
EINBAU EINES SENSORS IN EINEN REIFEN
INCLUSION D'UN CAPTEUR DANS UN PNEU

(30) Priority: 15.11.2022 US 202263383725 P; 31.10.2023 US 202318498173
(43) Date of publication of application: 22.05.2024
(73) Proprietor: The Goodyear Tire & Rubber Company, Akron, OH 44316 (US)
(72) Inventor: WEST, Jeffrey McKay, Uniontown, 44685 (US); SUH, Peter Jung-min, Copley, 44321 (US); MORRIS, Brian Richard, Uniontown, 44685 (US); BYATARAYANAPURA GOPALA, Arun Kumar, Copley, 44321 (US); CHOATE, Bruce Thomas, Wadsworth, 44281 (US)
(74) Representative: Kutsch, Bernd

(56) References cited:
- EP-A1- 4 015 255
- WO-A1-2021/162464
- CH-A2- 708 955
- US-A- 5 749 984
- US-A1- 2021 039 451
- US-A1- 2021 114 419

## Description

### FIELD OF THE INVENTION

The present invention relates to the field of sensors, in particular to tire sensors.

### BACKGROUND

In the manufacture of a pneumatic tire, the tire is typically built on the drum of a tire-building machine, which is known in the art as a tire building drum. Numerous tire components are wrapped about and/or applied to the drum in sequence, forming a cylindrical-shaped tire carcass. The tire carcass is then expanded into a toroidal shape for receipt of the remaining components of the tire, such as a belt package and a rubber tread. The completed toroidally-shaped unvulcanized tire carcass, typically called a green tire, is then inserted into a mold or press for forming of the tread pattern and curing or vulcanization.

US 2021/114419 A1 describes a sensor comprising a power source embedded in rubber.

US 5,749,984 describes a power source for a rubber-embedded sensor.

US 2021/039451 A1 describes a tire comprising a module and a receptable connected to an inner surface of the tire. However, prior art rubber-embedded sensors are limited in their life cycle by the available power source.

### SUMMARY OF THE INVENTION

The invention solves the above problem by providing an apparatus in accordance with claim 1 and a method in accordance with claim 7.

Dependent claims refer to preferred embodiments of the invention.

While the invention is mainly described in the context of a pneumatic tire below, it is to be understood that the invention may also be employed in a non-pneumatic tire without affecting the overall concept or operation of the invention.

### BRIEF DESCRIPTION OF THE DRAWINGS

Many aspects of the present invention can be better understood with reference to the following drawings. The components in the drawings are not necessarily to scale, with emphasis instead being placed upon clearly illustrating the principles of the invention. Moreover, in the drawings, like reference numerals designate corresponding parts throughout the several views.
FIG. 1 is a drawing of a vehicle with one or more tires that include a partially embedded active sensor according to various embodiments of the present invention.
FIG. 2 is a perspective cross-sectional view of a tire shown in FIG. 1, after installation of an active sensor according to various embodiments of the present invention.
FIG. 3 is an example of a partially embedded active sensor of FIG. 2 according to various embodiments of the present invention.
FIG. 4 is an example of an exploded view of a partially embedded active sensor of FIG. 3 according to various embodiments of the present invention.
FIG. 5A is an example perspective view of a printed circuit board according to various embodiments of the present invention.
FIG. 5B is an example perspective view of a power source housing according to various embodiments of the present invention.
FIG. 6 is an example of an exploded view of a partially embedded active sensor of FIG. 2 according to various embodiments of the present invention.
FIG. 7 is an example of a partially embedded active sensor of FIG. 2 according to various embodiments of the present invention.
FIG. 8 is an example assembly view of a partially embedded active sensor of FIG. 2 according to various embodiments of the present invention.
FIG. 9A is a perspective view of a power source housing according to various embodiments of the present invention.
FIG. 9B is a perspective view of a removable cover corresponding to the power source housing of FIG. 9A according to various embodiments of the present invention.
FIG. 10 is an example cross-sectional perspective view of the assembly shown in FIG. 2 according to various embodiments of the present invention.

### DEFINITIONS

"Axial" and "axially" mean lines or directions that are parallel to the axis of rotation of the tire.

"Axially inward" and "axially inwardly" refer to an axial direction that is toward the axial center of the tire.

"Axially outward" and "axially outwardly" refer to an axial direction that is away from the axial center of the tire.

"Circumferential" means lines or directions extending along the perimeter of the surface of the annular tread perpendicular to the axial direction.

"Equatorial plane (EP)" means the plane perpendicular to the tire's axis of rotation and passing through the center of its tread.

"Inboard side" means the side of the tire nearest the vehicle when the tire is mounted on a wheel and the wheel is mounted on the vehicle.

"Innerliner" means the layer or layers of elastomer or other material that form the inside surface of a tubeless tire and that contain the inflating fluid within the tire.

"Lateral" means an axial direction.

"Lateral edges" means a line tangent to the axially outermost tread contact patch or footprint as measured under normal load and tire inflation, the lines being parallel to the equatorial centerplane.

"Outboard side" means the side of the tire farthest away from the vehicle when the tire is mounted on a wheel and the wheel is mounted on the vehicle.

"Radial" and "radially" mean lines or directions that are perpendicular to the axis of rotation of the tire.

"Radially inward" and "radially inwardly" refer to a radial direction that is toward the central axis of rotation of the tire.

"Radially outward" and "radially outwardly" refer to a radial direction that is away from the central axis of rotation of the tire.

"TPMS" means a tire pressure monitoring system, which is an electronic system that measures the internal pressure of a tire and is capable of communicating the pressure to a processor that is mounted on the vehicle and/or is in electronic communication with electronic systems of the vehicle.

### DETAILED DESCRIPTION OF PREFERRED EMBODIMENTS OF THE INVENTION

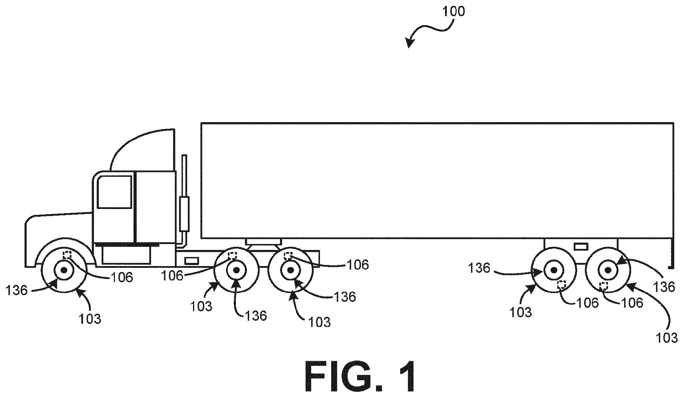

With reference to FIG. 1, a vehicle 100 is shown with one or more tires 103. Each tire 103 includes a partially embedded sensor 106. In some embodiments, the sensor 106 is a component of a tire pressure monitoring system (TPMS). According to various embodiments, each one of the tires 103 on the vehicle 100 may include one or more of the embedded sensors 106. While the vehicle 100 is depicted as a commercial truck, the vehicle 100 may comprise any type of vehicle that employs tires where the commercial truck is presented as an example. To this end, the vehicle 100 may comprise other vehicles falling into various categories such as passenger vehicles, off-road vehicles and the like, in which such vehicles include a greater or lesser number of tires 103 than are shown in FIG. 1.

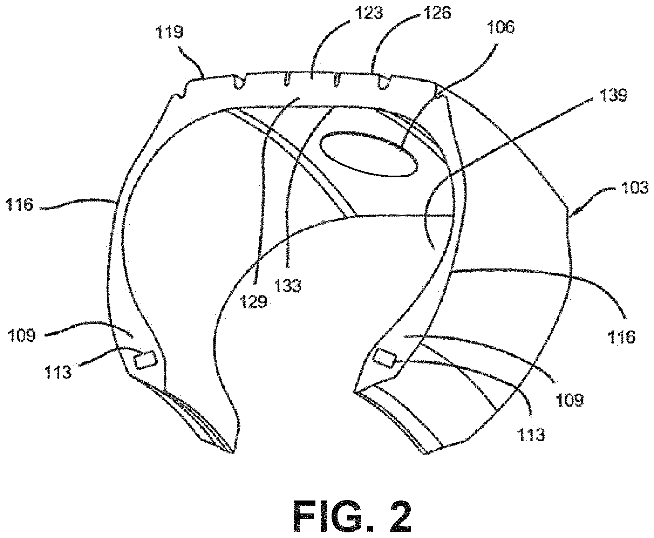

Turning to FIG. 2, shown is a cross-sectional view of the tire 103 according to various embodiments. The tire 103 includes a pair of bead areas 109, each one of which is formed with a bead core 113 that is embedded in the respective bead area 109. Each one of a pair of sidewalls 116 extends radially outwardly from a respective bead area 109 to a ground-contacting tread 119. The tread 119 is formed with multiple tread elements or tread blocks 123 and defines a radially outer surface 126. The tire 103 is reinforced by a carcass 129 that toroidally extends from one bead area 109 to the other bead area 109. An innerliner 133 is formed on the inner or inside surface of the carcass 129. The tire 103 is mounted on the flange of a wheel or rim 136 (FIG. 1) forming an internal cavity 139.

According to one embodiment, a sensor 106 is mounted to the tire 103. The sensor 106 detects certain real-time parameters of the tire 103, and preferably includes a pressure sensor to sense the inflation pressure within a cavity 139 of the tire 103, and a temperature sensor to sense the temperature of the tire 103 and/or the temperature in the cavity 139 of the tire 103. In some embodiments, the sensor 106 may be a commercially available tire pressure monitoring system (TPMS) module or other sensing unit.

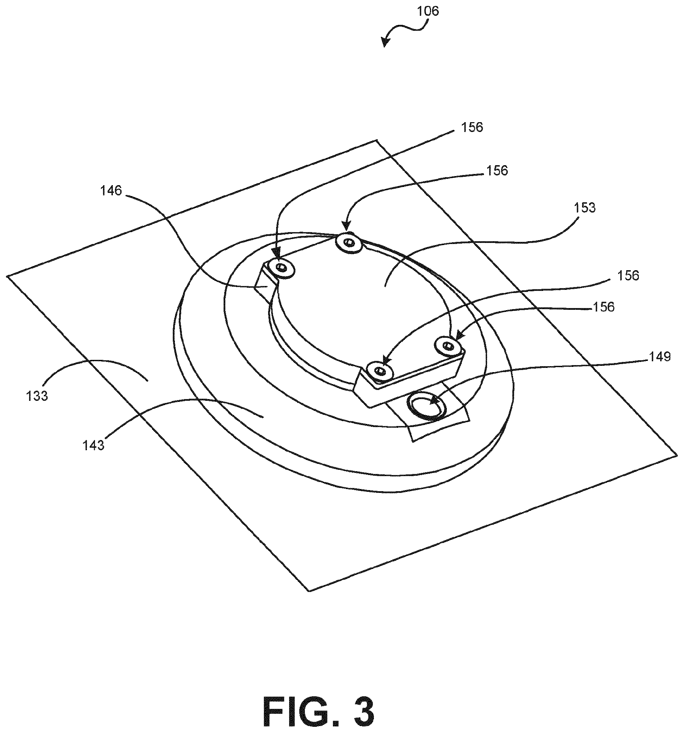

Turning to FIG. 3, the sensor 106 is at least partially embedded in the innerliner 133 of the tire 103 where various portions of the sensor 106 interlock with the rubber 143. In one embodiment, the sensor 106 may include a power source housing 146 and a sensing portal 149 to sense the inflation pressure within a cavity 139 of the tire 103 and the temperature of the cavity 139 or structure of the tire 103. FIG. 3 shows an assembled apparatus, comprising a sensor 106 interlocked with rubber 143, the sensor 106 including a power source housing 146. At least a portion of the power source housing 146 protrudes through the rubber 143.

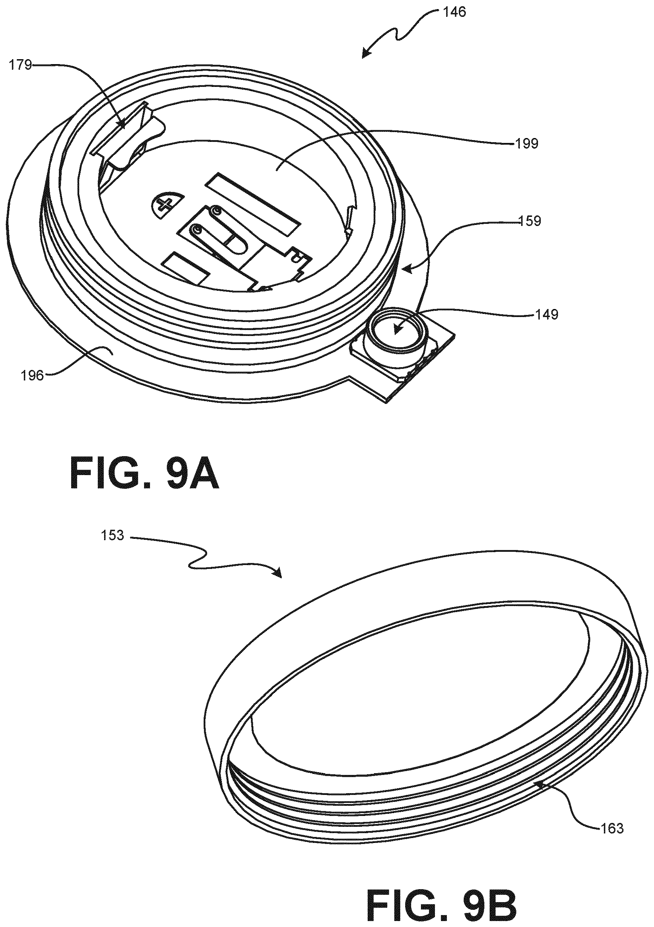

The power source housing 146 includes a removable cover 153 which seals to the power source housing 146 to prevent water and debris from interfering with the electrical components and connections disposed therein. In some embodiments, the removable cover 153 can serve as an antenna which transmits data from the sensor 106 to the vehicle 100 or another recipient. In some embodiments, the power source housing 146 includes a removable cover 153, the removable cover 153 attaching to the power source housing 146 via one or more fasteners 156. Examples of fasteners 156 include, but are not limited to, screws, nuts, bolts, studs, pins, clamps, or other fasteners. In other embodiments, the cover 153 may be hingedly attached to the power source housing 146 and secured by means of a latch, pin, clasp, or other means to secure the cover 153 in place. In further embodiments, as illustrated in FIGS. 9A, and 9B, the apparatus further comprises a first thread 159 (FIG. 9A) on the sensor 106, and a second thread 163 (FIG. 9B) on a side of the removable cover 153. The first thread 159 opposes the second thread 163. In some embodiments, the first thread 159 is disposed on the power source housing 146.

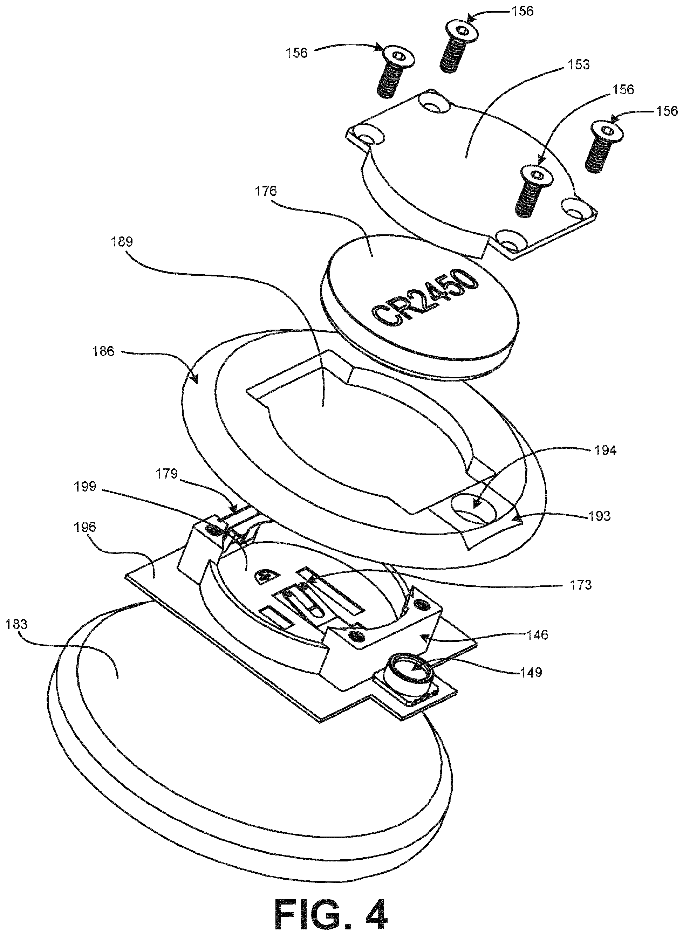

In FIG. 4, an example exploded view of the partially embedded sensor 106 is shown. The power source housing 146 is connected to a flexible printed circuit board or PCB 166 which includes electronic components 169 such as processors, resistors, transistors, capacitors, inductors, diodes, or other components of the sensing circuitry. The power source housing 146 includes a pair of electrodes 173 which extend up through the power source housing 146 from the electronic components 169 on the PCB 166 to make contact with the positive and negative terminals of a battery 176. In one embodiment, the power source housing 146 also includes a battery holder 179 to secure the battery 176 in the power source housing 146. According to one embodiment, the battery 176 is a coin cell battery. However, any other type of battery could be used as well. As shown in FIG. 4, the sensing portal 149 may be connected to the PCB 166 outside the power source housing 146 to provide direct access to the cavity 139 of a tire 103 to sense the pressure of the tire 103.

In one embodiment, the sensor 106 is assembled by connecting the PCB 166 having the electronic components 169 to the power source housing 146. The PCB 166 and power source housing 146 are secured between pieces of rubber 183, 186. At this stage, the rubber comprises green rubber. In some embodiments, the sensor 106 is secured between a base piece of green rubber 183 and a top piece of green rubber 186. The top piece of green rubber 186 includes an opening 189 to accommodate the power source housing 146. The top piece of green rubber 186 or another piece of green rubber 193 includes an opening 194 to accommodate the sensing portal 149. In some embodiments, the sensor 106 interlocks with the rubber 143 by way of one or more flanges 196 extending from a portion of the sensor 106.

According to various embodiments, the sensor 106 is secured in the rubber 143 by interlocking the flange 196 of the sensor 106 with the pieces of rubber 183, 186, 193. In some embodiments, the power source housing 146 includes the flange 196. In an alternative embodiment, the flange 196 is an extension of the PCB 166. The flange 196 is shown in FIG. 4 as rectangular in shape. However, in various embodiments the flange 196 is circular, triangular, hexagonal, or any other shape which extends at least in part beyond the outer edges of the power source housing 146 so as to interlock with the rubber 143. Additionally, in some embodiments, the flange 196 may include holes, cutouts, pins, bosses, or other features to increase the cured strength of the rubber pieces 183, 186 with the flange 196. Furthermore, the flange 196 in FIG. 4 is shown extending outwardly from the power source housing 146 in all directions on a plane. However, in other embodiments, the flange 196 extends outwardly in at least one direction from the power source housing 146.

Once the PCB 166, power source housing 146, and pieces of green rubber 183, 186, 193 are assembled, they are then placed on the innerliner 133 of a green tire. The green tire is then cured, and the pieces of rubber 183, 186, 193 cure together, securing the sensor 106 in the tire 103 such that the sensor 106 is interlocked with the cured rubber 143. At least a portion of the power source housing 146 protrudes through the cured rubber 143 such that it is exposed to the cavity 139. The portion protruding through the rubber 143 includes a battery receptacle 199. According to various embodiments, a method for assembling the sensor 106 in the tire 103 comprises the steps of providing a sensor 106 comprising a power source housing 146 attached to a printed circuit board 166; interlocking a portion of the sensor 106 with green rubber 183, 186, 193 within a green tire such that at least a portion of the power source housing 146 is exposed in an axially inward direction of the green tire; and curing the green tire after interlocking the sensor 106 with the green rubber 183, 186, 193.

After the tire 103 has been cured, the sensor 106 is ready to receive the battery 176. The assembly is completed by placing a battery 176 into the exposed portion 199 of the power source housing 146 and attaching a removeable cover 153 to the power source housing 146. Thus, the sensor 106 is exposed to the heat of the curing process, thereby interlocking the sensor 106 with the cured rubber 143. However, the battery 176 is put into place after the curing process given that the battery would not likely survive the heat of the curing process itself.

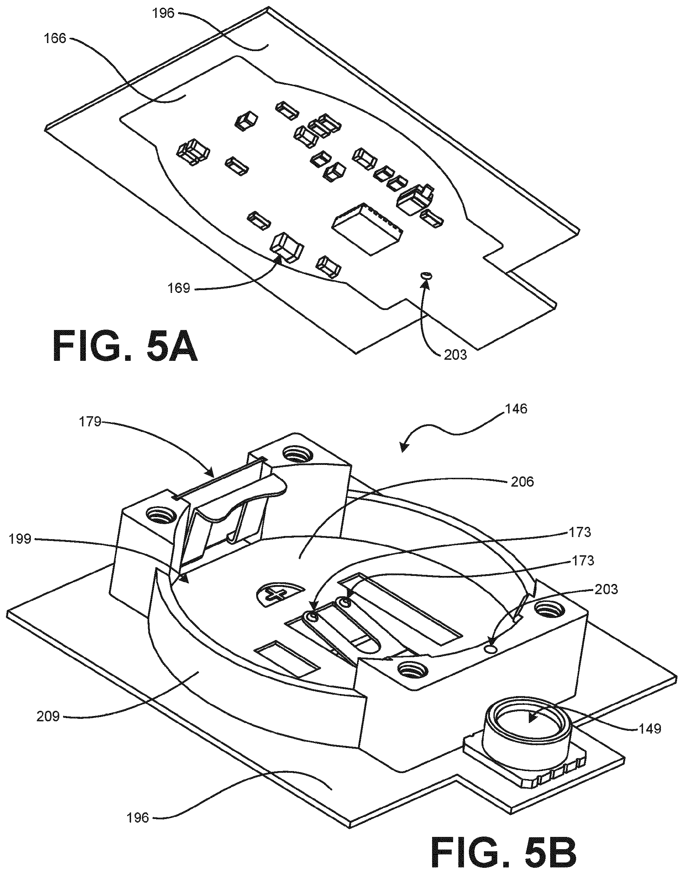

Turning to FIG. 5A and 5B, shown is one embodiment of the sensor 106. FIG. 5A depicts an example of a flexible PCB 166 with various electronic components 169. The specific electronic components 169 that may be included on the PCB 166 will vary depending on the number and type of sensor circuits that are desired. In one embodiment, an antenna is disposed on a surface of the sensor 106. An antenna feed line channel 203 is shown on the PCB 166. The antenna feed line channel 203 extends up from the PCB 166 through the power source housing 146.. In some embodiments, there are additional structural covers around the electronic components 169 and PCB 166 to prevent the electronic components 169 from coming into contact with the rubber during vulcanization.

FIG. 5B shows an example of a power source housing 146. The power source housing includes a floor 206 and a plurality of sidewalls 209 extending substantially perpendicularly from the floor 206. Together, the plurality of sidewalls 209 and the floor 206 create the battery receptacle 199. The power source housing 146 also includes a battery holder 179 and electrodes 173. In some embodiments, the power source housing 146 comprises a heat-resistant polymer. The power source housing 146 is secured to the PCB 166. In some embodiments, the power source housing 146 may be injection molded to the PCB 166.

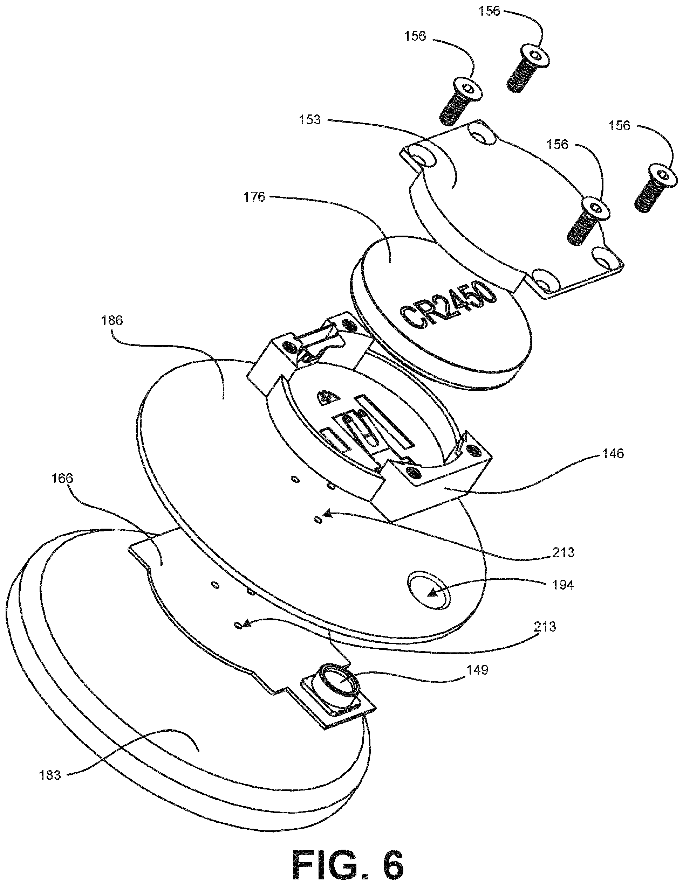

FIG. 6 shows an example exploded view of a partially embedded active sensor 106. More specifically, FIG. 6 shows an apparatus comprising a sensor 106 positioned in an interior of a tire 103. The sensor 106 includes a power source housing 146, where at least a portion of the sensor 106 interlocks with a rubber portion 143 of a tire 103. In one embodiment, the portion of the sensor 106 that interlocks with the rubber 143 is the PCB 166. The power source housing 146 is disposed on an interior surface of the tire 103, where the power source housing 146 is fastened to the PCB 166 through the rubber 186. Electrical conductors are positioned between the power source housing 146 and the PCB 166, where the electrical conductors extend through the rubber 186.

In this embodiment, the PCB 166 is separated from the power source housing 146 by a top piece of green rubber 186. The base piece of green rubber 183 and the top piece of green rubber 186 cure together during vulcanization to secure the PCB 166 and electronic components 169 to the innerliner 133 of the tire 103. The PCB 166 is connected to the power source housing 146 through one or more connection holes 213 in the top piece of green rubber 186. While FIG. 6 depicts three connection holes 213, other embodiments will have more or fewer connection holes 213. According to one embodiment, the one or more connection holes 213 are large enough to fit the tip of a soldering iron. In this embodiment, one or more electrical conductors extend between a terminal of a battery 176 and an electrical contact on the PCB 166. The electrical conductors of the power source housing 146 can be soldered to pads on the PCB 166 after the green rubber pieces 183, 186 are cured together. According to one embodiment, one or more connection holes 213 are sized to accommodate mechanical fasteners 156. The mechanical fasteners 156 secure the power source housing 146 to the PCB 166 through the connection holes 213 in the top piece of green rubber 186 or the rubber 143 after curing.

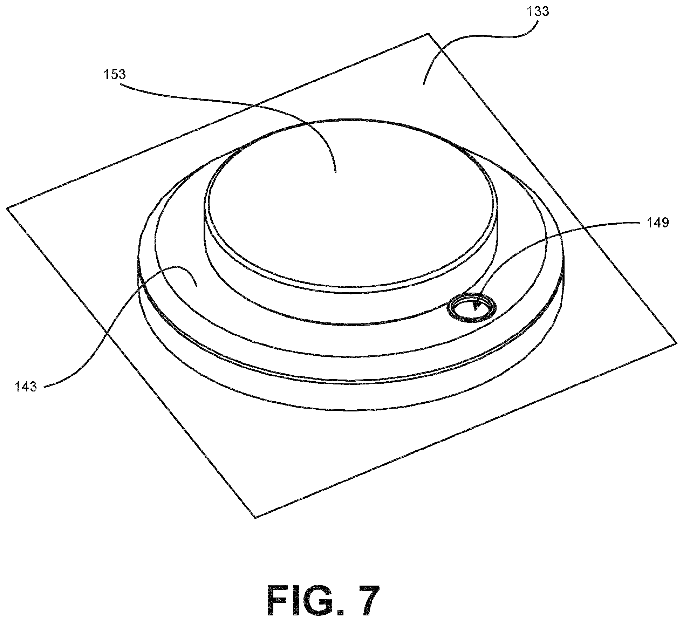

In FIG. 7, shown is an example of a sensor 106 that is at least partially embedded in the innerliner 133 of the tire 103. Various portions of the sensor 106 interlock with the rubber 143. In one embodiment, the sensor 106 includes a cover 153 that is attached to the power source housing 146. When attached, the cover 153 forms a seal with the power source housing 146 to prevent water and debris from entering the power source housing 146 and interfering with the electrical connections disposed therein. In some embodiments, the cover 153 encloses the power source housing 146 such that no portion of the power source housing 146 is exposed. The sensing portal 149 extends through the rubber 143 such that at least a portion of the sensing portal 149 is exposed to the inner cavity 139 of the tire 103.

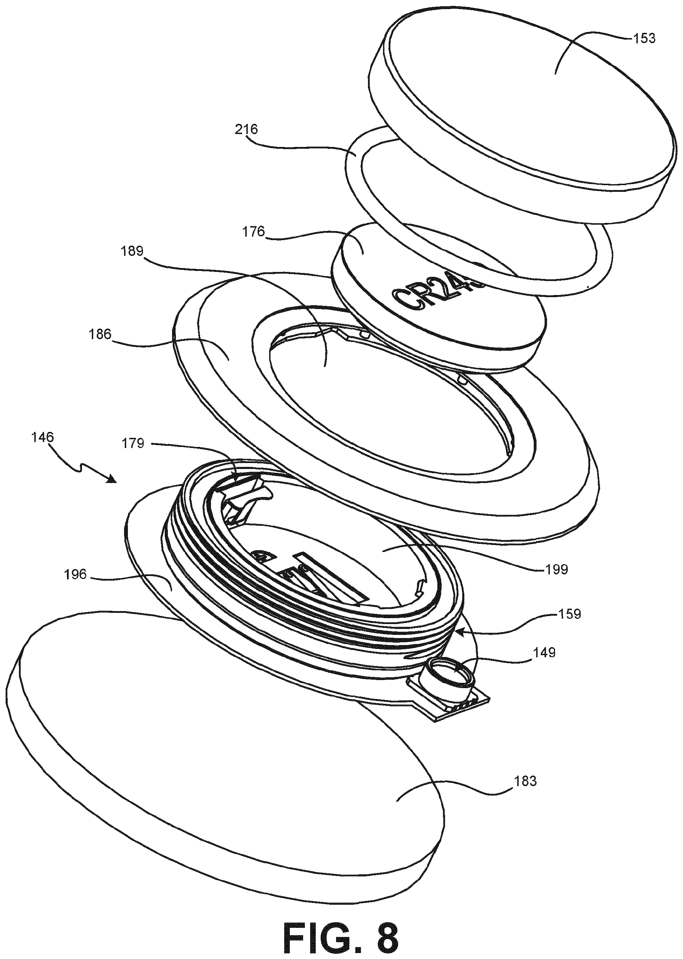

Turning to FIG. 8, the PCB 166 is directly connected to the power source housing 146. In some embodiments, a flange 196 extends outwardly from the PCB 166. In other embodiments, the flange 196 extends outwardly from the power source housing 146. In further embodiments, the flange 196 consists of one or more extensions extending in at least one direction away from the power source housing 146. The PCB 166 and power source housing 146 are interlocked with one or more pieces of green rubber 183, 186 or with the resulting rubber 143 after curing. In some embodiments, the power source housing 146 includes a thread 159 which corresponds to and opposes a thread 163 of the cover 153. While FIG. 8 shows the power source housing thread 159 on the exterior of the sidewalls 209 of the power source housing 146, other embodiments include the thread 159 on the interior of the power source housing sidewalls 209.

When the sensor 106 is interlocked with the cured rubber 143 by virtue of the flange 196 mentioned above, the battery 176 is inserted into the battery receptacle 199 of the power source housing 146 and the cover 153 is attached. In some embodiments, a seal ring 216 is used to prevent water and debris from entering the battery receptacle. In FIG. 8, the seal ring 216 comprises a rubber o-ring 216. According to other embodiments, other shapes and types of seal rings 216 are used.

FIG. 9A and 9B depict one embodiment of a power source housing 146 and a corresponding cover 153. FIG. 9A shows a power source housing 146 including a flange 196 and a thread 159 on the exterior of the sidewalls 209. The power source housing thread 159 corresponds to the thread 163 on the cover 153 shown in FIG. 9B.

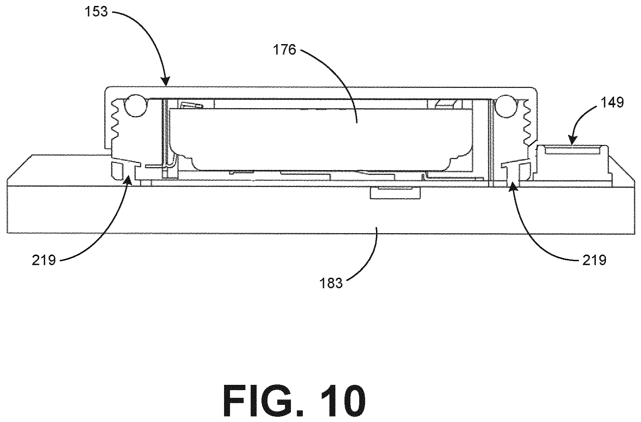

In FIG. 10, an example of a cross-section of an embodiment is shown depicting one method of interlocking a portion of the sensor 106 with rubber by way of an amount of rubber disposed in at least one channel 219 extending through at least a portion of the sensor 106. In this embodiment, the sensor 106 interlocks with the rubber 143 by way of an amount of rubber disposed in one or more channels 219 extending through at least a portion of the sensor 106. FIG. 10 shows the channels 219 entering the exterior of the sidewalls 209 of the power source housing 146, turning, and extending down through the power source housing floor 206 and through the PCB 166. However, in other embodiments, the channels 219 extend only partially through the sidewalls 209. In further embodiments, the channels 219 extend partially or wholly through the flange 196. When the pieces of green rubber 183, 186, 193 undergo vulcanization, the rubber flows into the channels 219 and then hardens. Once vulcanization is completed, the cured rubber 143 inside the channels 219 holds the sensor 106 in position in the tire 103.

In the present invention, disjunctive language such as the phrase "at least one of X, Y, or Z," unless specifically stated otherwise, is otherwise understood with the context as used in general to present that an item, term, etc., may be either X, Y, or Z, or any combination thereof (*e.g.,* X, Y, and/or Z). Thus, such disjunctive language is not generally intended to, and should not, imply that certain embodiments require at least one of X, at least one of Y, or at least one of Z to each be present.

## Claims

1. An apparatus comprising a sensor (106) interlocked in rubber, the sensor (106) including a power source housing (146), **characterized in that** at least a portion of the power source housing (146) protrudes through the rubber (143).

2. The apparatus of claim 1, wherein the rubber (143) comprises green rubber and/or wherein the sensor (106) interlocks with the rubber (143) by way of an amount of rubber disposed in at least one channel (219) extending through at least a portion of the sensor (106).

3. The apparatus of at least one of the claims 1 or 2, wherein the sensor (106) interlocks with the rubber (143) by way of at least one flange (196) extending from at least a portion of the sensor (106).

4. The apparatus of at least one of the claims 1 to 3, wherein the power source housing (146) includes a removable cover (153).

5. The apparatus of at least one of the claims 1 to 4, further comprising a first thread (159) on the sensor (106); and a second thread (163) on a side of the removable cover (153), the first thread opposing the second thread.

6. The apparatus of at least one of the claims 1 to 5, wherein the removable cover (153) is fastened to the power source housing (146) by a fastener (156) and/or further comprising an antenna disposed on a surface of the sensor (106).

7. A method comprising:
providing a sensor (106) comprising a power source housing (146) attached to a printed circuit board (166);
interlocking a portion of the sensor (106) with green rubber within a green tire such that at least a portion of the power source housing (146) is exposed in an axially inward direction of the green tire; and
curing the green tire after the interlocking of the portion of the sensor (106) with the green rubber.

8. The method of claim 7, further comprising interlocking a portion of the sensor (106) with green rubber by way of an amount of rubber disposed in at least one channel (219) extending through at least a portion of the sensor (106) and/or further comprising interlocking at least one flange (196) of the portion of the sensor (106) with the green rubber.

9. The method of claim 7 or 8, further comprising placing a battery (176) into the portion of the power source housing (146).

10. The method of claim 7, 8 or 9, further comprising attaching a removeable cover (153) to the power source housing (146) and/or further comprising positioning an antenna on a surface of the sensor (106).

## Patentansprüche

1. Vorrichtung, die einen in Kautschuk eingebetteten Sensor (106) umfasst, wobei der Sensor (106) ein für eine Stromquelle vorgesehenes Gehäuse (146) umfasst, **dadurch gekennzeichnet, dass** mindestens ein Teil des für eine Stromquelle vorgesehenen Gehäuses (146) durch den Kautschuk (143) hindurchragt.

2. Vorrichtung nach Anspruch 1, wobei der Kautschuk (143) unvulkanisierten Kautschuk umfasst und/oder wobei der Sensor (106) mittels einer Kautschukmenge, die in mindestens einem Kanal (219) angebracht ist, der sich durch mindestens einen Abschnitt des Sensors (106) erstreckt, in den Kautschuk (143) eingebettet ist.

3. Vorrichtung nach mindestens einem der Ansprüche 1 oder 2, wobei der Sensor (106) mittels mindestens eines Flansches (196), der sich von mindestens einem Abschnitt des Sensors (106) erstreckt, in den Kautschuk (143) eingebettet ist.

4. Vorrichtung nach mindestens einem der Ansprüche 1 bis 3, wobei das für eine Stromquelle vorgesehene Gehäuse (146) eine abnehmbare Abdeckung (153) umfasst.

5. Vorrichtung nach mindestens einem der Ansprüche 1 bis 4, die ferner einen ersten Leitungsdraht (159) an dem Sensor (106) und einen zweiten Leitungsdraht (163) an einer Seite des abnehmbaren Deckels (153) umfasst, wobei der erste Leitungsdraht dem zweiten Leitungsdraht gegenüberliegend angebracht ist.

6. Vorrichtung nach mindestens einem der Ansprüche 1 bis 5, wobei die abnehmbare Abdeckung (153) über eine Befestigungsvorrichtung (156) an dem für eine Stromquelle vorgesehenen Gehäuse (146) befestigt ist; und/oder die ferner eine Antenne umfasst, die an einer Oberfläche des Sensors (106) angebracht ist.

7. Verfahren, das Folgendes umfasst:
das Bereitstellen eines Sensors (106), der ein für eine Stromquelle vorgesehenes Gehäuse (146) umfasst, das an einer Leiterplatte (166) befestigt ist;
das Einbetten eines Abschnitts des Sensors (106) in unvulkanisiertem Kautschuk in einem unvulkanisierten Reifen, derart, dass mindestens ein Abschnitt des für eine Stromquelle vorgesehenen Gehäuses (146) in einer Richtung des unvulkanisierten Reifens freiliegt, die in axialer Richtung nach innen gerichtet ist; und
das Vulkanisieren des unvulkanisierten Reifens nach dem Einbetten des Sensorabschnitts (106) in den unvulkanisierten Kautschuk.

8. Verfahren nach Anspruch 7, das ferner das Einbetten eines Abschnitts des Sensors (106) in unvulkanisiertem Kautschuk mittels einer Menge Kautschuk umfasst, die in mindestens einem Kanal (219) angebracht ist, der sich durch mindestens einen Abschnitt des Sensors (106) erstreckt; und/oder das ferner das Einbetten mindestens eines Flansches (196) des Sensorabschnitts (106) in den unvulkanisierten Kautschuk umfasst.

9. Verfahren nach mindestens einem der Ansprüche 7 oder 8, das zusätzlich das Anbringen einer Batterie (176) in dem Abschnitt des für eine Stromquelle vorgesehenen Gehäuses (146) umfasst.

10. Verfahren nach mindestens einem der Ansprüche 7, 8 oder 9, das ferner das Befestigen einer abnehmbaren Abdeckung (153) an dem für eine Stromquelle vorgesehenen Gehäuse (146) umfasst; und/oder das ferner das Anordnen einer Antenne auf einer Oberfläche des Sensors (106) umfasst.

## Revendications

1. Appareil qui comprend un capteur (106) encastré dans du caoutchouc, dans lequel le capteur (106) englobe un boîtier (146) destiné à une source d'alimentation, **caractérisé en ce qu'**au moins une portion du boîtier (146) destiné à une source d'alimentation fait saillie à travers le caoutchouc (143).

2. Appareil selon la revendication 1, dans lequel le caoutchouc (143) comprend du caoutchouc non vulcanisé et/ou dans lequel le capteur (106) s'encastre dans le caoutchouc (143) au moyen d'une quantité de caoutchouc qui est disposée dans au moins un canal (219) qui s'étend à travers au moins une portion du capteur (106).

3. Appareil selon au moins une des revendications 1 ou 2, dans lequel le capteur (106) s'encastre dans le caoutchouc (143) au moyen d'au moins une bride (196) qui s'étend à partir d'au moins une portion du capteur (106).

4. Appareil selon au moins une des revendications 1 à 3, dans lequel le boîtier (146) destiné à une source d'alimentation englobe un couvercle amovible (153).

5. Appareil selon au moins une des revendications 1 à 4, qui comprend en outre un premier fil conducteur (159) sur le capteur (106) et un deuxième fil conducteur (163) sur un côté du couvercle amovible (153) ; dans lequel le premier fil conducteur est disposé à l'opposé au deuxième fil conducteur.

6. Appareil selon au moins une des revendications 1 à 5, dans lequel le couvercle amovible (153) est fixé au boîtier (146) destiné à une source d'alimentation par l'intermédiaire d'un dispositif de fixation (156) ; et/ou qui comprend en outre une antenne qui est disposée sur une surface du capteur (106).

7. Procédé comprenant le fait de :
procurer un capteur (106) qui comprend un boîtier (146) destiné à une source d'alimentation, qui est fixé à une carte de circuits imprimés (166) ;
encastrer une portion du capteur (106) dans du caoutchouc non vulcanisé au sein d'un bandage non vulcanisé, d'une manière telle qu'au moins une portion du boîtier (146) destiné à une source d'alimentation est exposée dans une direction du bandage non vulcanisé, qui est orientée vers l'intérieur dans la direction axiale ; et
vulcaniser le bandage non vulcanisé après avoir encastré la portion du capteur (106) dans le caoutchouc non vulcanisé.

8. Procédé selon la revendication 7, qui comprend en outre le fait d'encastrer une portion du capteur (106) dans du caoutchouc non vulcanisé au moyen d'une quantité de caoutchouc disposée dans au moins un canal (219) qui s'étend à travers au moins une portion du capteur (106) ; et/ou qui comprend en outre le fait d'encastrer au moins une bride (196) de la portion du capteur (106) dans le caoutchouc non vulcanisé.

9. Appareil selon au moins une des revendications 7 ou 8, qui comprend en outre le fait de placer une batterie (176) dans la portion du boîtier (146) destiné à une source d'alimentation.

10. Appareil selon au moins une des revendications 7, 8 ou 9, qui comprend en outre le fait de fixer un couvercle amovible (153) au boîtier (146) destiné à une source d'alimentation ; et/ou qui comprend en outre le fait de positionner une antenne sur une surface du capteur (106).
